# EUROPÄISCHE PATENTSCHRIFT

(11) **EP 0 954 762 B1**
(45) Veröffentlichungstag und Bekanntmachung des Hinweises auf die Patenterteilung: **18.08.2004**
(21) Anmeldenummer: 98905349.1
(22) Anmeldetag: 26.01.1998
(51) Int. Cl.: G02B 6/245, H02G 1/12

(54) **VORRICHTUNG ZUM ENTFERNEN VON SCHICHTEN AN LICHTWELLENLEITERN**
DEVICE FOR REMOVING LAYERS FROM A WAVEGUIDE
DISPOSITIF D'ENLEVEMENT DE COUCHES SUR DES GUIDES D'ONDE

(30) Priorität: 24.01.1997 CH 15097
(43) Veröffentlichungstag der Anmeldung: 10.11.1999
(73) Patentinhaber: Schleuniger Holding AG, 3608 Thun (CH)
(72) Erfinder: STEPAN, Jiri, CH-7320 Sargans (CH)
(74) Vertreter: Rosenich, Paul, Dipl.-Ing.
(86) Internationale Anmeldenummer: PCT/EP1998/000406
(87) Internationale Veröffentlichungsnummer: WO 1998/033082

(56) Entgegenhaltungen:
- WO-A-89/02796
- CH-A- 683 645
- DE-A- 3 906 520
- DE-A- 4 203 995
- US-A- 4 601 093
- US-A- 4 745 828
- PATENT ABSTRACTS OF JAPAN vol. 017, no. 040 (P-1475), 26.Januar 1993 & JP 04 257802 A (FURUKAWA ELECTRIC CO LTD:THE), 14.September 1992, in der Anmeldung erwähnt

## Beschreibung

Die Erfindung betrifft eine Vorrichtung gemäss dem Oberbegriff des Anspruches 1 mit einer Anordnung elektromechanischer Teile für das Abziehen einer oder mehrerer Schutzschichten von einem ein- oder mehradrigen Lichtwellenleiter. Eine dem Oberbegriff entsprechende Vorrichtung wurde durch die Anmelderin unter der Bezeichnung F.O. 45 oder durch die Bezeichnung Handcoax auf den Markt gebracht.

Für das Abisolieren von ausschliesslich Lichtwellenleitern sind weitere Vorrichtungen veröffentlicht worden, so beispielsweise unter der Bezeichnung HJS-01 von einer japanischen Firma. Diese Vorrichtung verfügt jedoch im Gegensatz zu den angegebenen Vorrichtungen der Anmelderin über keinen elektrischen Antrieb zur Steuerung des Abziehens.

Eine vom Aussehen ähnliche Vorrichtung ist in der DE-A-4203995 beschrieben. Bei dieser Konstruktion wird ein spezielles Material für Abisoliermesser unter Schutz gestellt. Die Kraft, mit der die Abisoliermesser gegen den Lichtwellenleiter gedrückt werden, das Einhalten der Erwärmungszeit und insbesondere die Abziehgeschwindigkeit sind dabei dem Bedienpersonal überlassen. Dies verursacht grosse Differenzen in der Qualität und Zeitverluste durch die Bedienung.

Insbesondere ergibt sich als Problem die Unmöglichkeit, optimale Abziehvorgänge einzuhalten. So ist beim händischen Abziehen in der Regel nach dem Einschneiden des Mantels und am Beginn des Abziehens ein grösserer Abziehwiderstand zu verspüren, der das Bedienpersonal zur Applizierung einer relativ grossen Abziehkraft veranlasst. Nach dem Beginn der Abziehbewegung sinkt jedoch der Abziehwiderstand rapide, so dass die durch das Bedienpersonal aufgebrachte hohe Kraft zu einer plötzlichen, ruckartigen Abziehbewegung führt.

Dies kann axiale Überbelastungen der Glasfaser bzw. des Leiters verursachen.

Bei der Vorrichtung gemäss der DE-A bzw. bei dem mit dieser angewendeten Verfahren mit "weichen" Abisoliermessern ist, wie auch bei anderen Verfahren, es üblich, den Mantel zu erwärmen. Damit jedoch die weichen Messer gut einschneiden können, muss bei dieser bekannten Vorrichtung auch im Bereich der Messer erwärmt werden. Dieses kann jedoch nachteilig sein, weil ein weicher Mantel weniger Stützwiderstand für Zentrierfunktionen bietet. Ein etwas härterer Mantel im Bereich der Schnittstelle ist wünschenswert, da er erfindungsgemäss eine Abstreifhülle für die restliche erwärmte Schutzschicht bietet. Es soll somit durch die Erfindung auch insbesondere die Anwendung von harten, metallischen Abisoliermessern möglich sein, so dass die Schnittstelle selbst nicht erwärmt werden muss.

Die CH-A-683645 beschreibt eine halbautomatische Einrichtung für das Abisolieren von Lichtwellenleitern. Diese Einrichtung verfügt jedoch über mehrere einzelne, für jede Funktion separate Antriebe, was sich ungünstig hinsichtlich der Baugrösse und des erforderlichen Steuerungsvolumens auswirkt. Eine Ausführung dieser Einrichtung in Handgeräteform ist daher nur schwer möglich.

Ziel der Erfindung ist es somit weiters, bei sehr kleinem Bauvolumen und geringen Herstellkosten eine Vorrichtung mit wenigstens halbautomatisch gesteuertem Funktionsablauf zu erreichen, um damit eine gute Abziehqualität und gleichmässige Mantel- bzw. Schichtenentfernung wie bei herkömmlichen grösseren, vollautomatischen Einrichtungen zu erzielen.

Die Grösse und das erforderliche Steuerungsvolumen sollen so klein sein, dass eine erfindungsgemässe Vorrichtung, vergleichbar den bisher vorhandenen nicht motorisch angetriebenen Einrichtungen, handhaltbar sein soll.

Der Stand der Technik kennt weitere Dokumente, die Vorrichtungen beschreiben, die diese Aufgaben nicht erfüllen: DE-A-3736581; DE-A-4007762;DE-A-4038414; DE-A-3529141; JP-A-1-147503; JP-A-4-257802; JP-A-3-61908; JP-A-62-25703 und US-A-5033335.

Die Vorrichtungen der Ansprüche 1 und 2 lösen die Hauptaufgabe einer nach Baugrössenreduktion und dennoch gleichmässiger Abziehqualität. Verbesserte Lösungen mit weitergehender Integration und weitergehenden Vorteilen gegenüber dem Stand der Technik ergeben sich aus den abhängigen Ansprüchen. Die abhängigen Ansprüche betreffen dabei Einrichtungen, die auch mit Vorteil bei anderen Abisoliervorrichtungen eingesetzt werden können. Weitere Verbesserungen und erfindungsgemässe Details ergeben sich aus der Zeichnung, die ein erfindungsgemässes Ausführungsbeispiel darstellt.

Es zeigen dabei:
- Fig. 1: eine Ansicht auf ein komplettes, erfindungsgemässes Abisoliergerät mit geschlossenem Gehäuse;
- Fig. 2: eine Ansicht auf dasselbe Abisoliergerät mit einem Adapter für einen Montagehalter für spezielle Lichtwellenleiter;
- Fig. 3: eine isometrische Darstellung der Mechanik des Abisoliergerätes nach Fig. 1;
- Fig. 4: ein Detail der Führung der Abisoliermesser und Zentrierbacken.

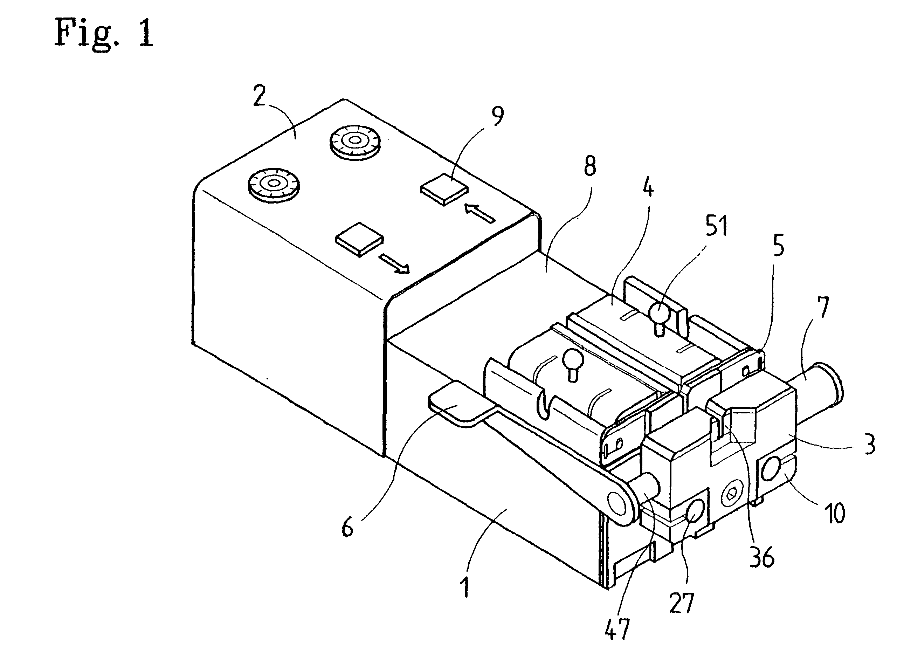

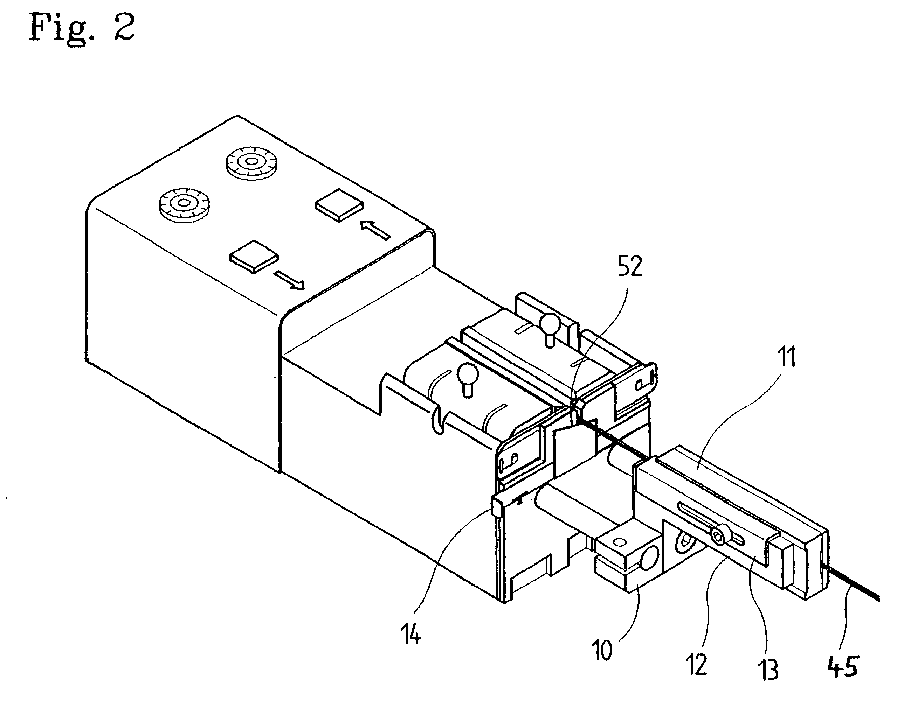

Fig. 1 zeigt einen Hauptkörper 1. Dieser trägt in seinem hinteren Teil ein Steuerungsgehäuse 2, in dem die Steuerungselektronik und wenigstens ein Betätigungselement 9 plaziert sind. Der Hauptkörper 1 umfasst einen Rahmen, der Schubstangen 28 lagert, an deren vorderen Enden 27 ein Wechselhalter 10 befestigt ist, der entweder mit einem Spannkopf 3 oder mit einem Adapter 12 (Fig.2) bestückt ist und der Aufnahme eines Lichtwellenleiters dient. Schwenkbare Heizbacken 4 mit Betätigungsgriffen 51 sind ebenso dargestellt wie Abisoliermesserbacken 5 und eine Spannkraftstellrosette für die Spannbacken 36, die durch Federkraft in Schliessstellung gehalten werden und durch einen Lösehebel 6 mit einem rechts-links Steilgewinde auf einer Welle 47 des Hebels6 für das Einführen eines Lichtwellenleiters geöffnet werden können.

Fig. 2 zeigt den gleichen Aufbau, jedoch an Stelle des Spannkopfes den Adapter 12, der einen Montagehalter 11 trägt, in den ein mehradriges Glasfaserleiter 45 eingelegt ist. In der Regel werden beim Abisolieren und anschliessenden Spleissen von Lichtwellenleitern solche Montagehalter 11 verwendet, die während des gesamten Bearbeitungsverfahrens am Lichtwellenleiter verbleiben. Ein Positionsanschlag 13 bestimmt die relative Axialposition des Montagehalters 11 am Adapter 12.

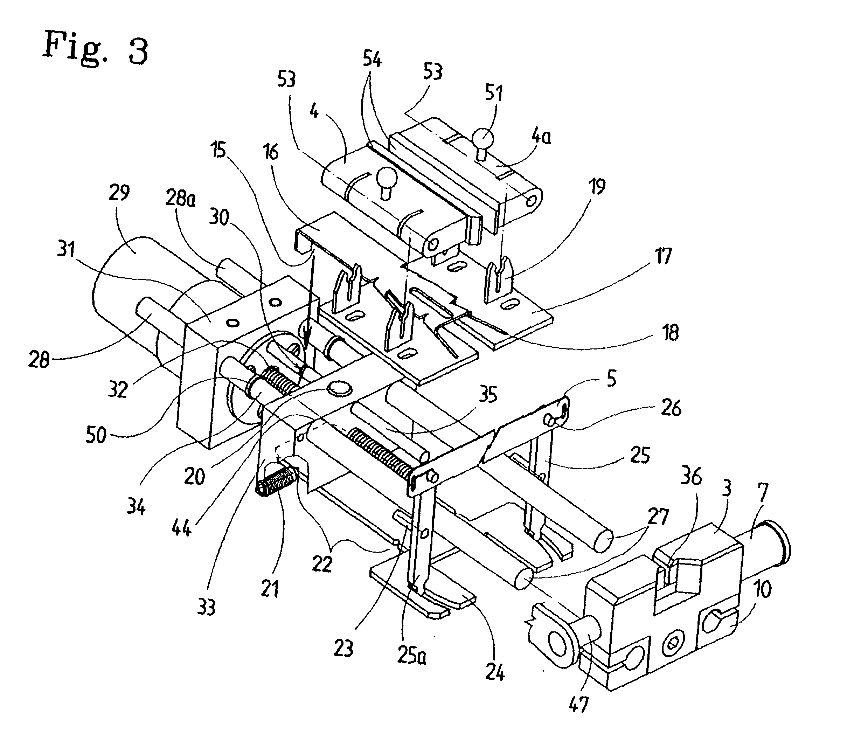

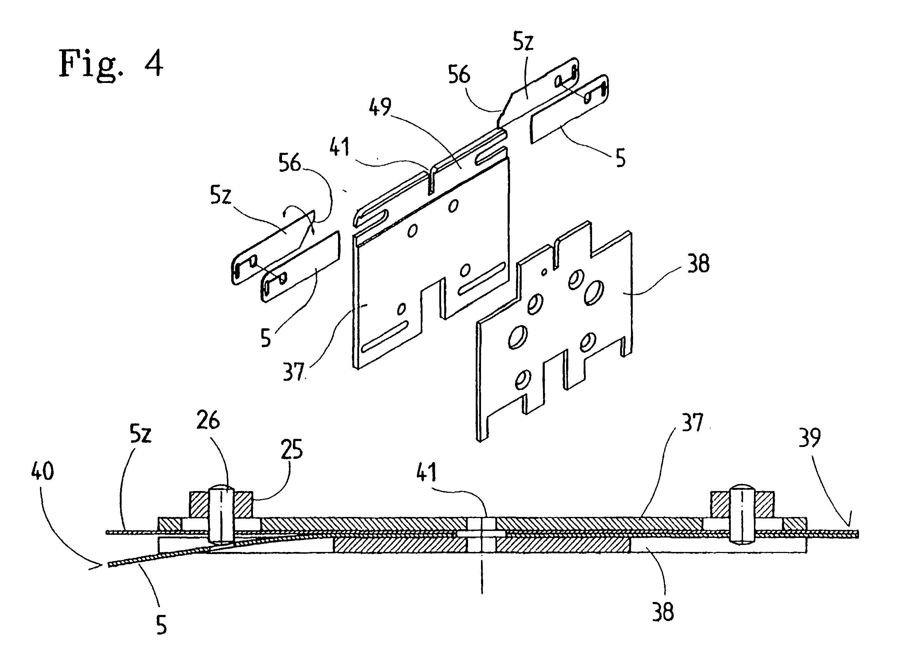

Fig. 3 zeigt ein Beispiel eines inneren Aufbaus, eines erfindungsgemässen Ausführungsbeispieles mit einem, mit dem Hauptkörper verbindbaren Motorträger 31 und einem daran befestigten elektrischen Antrieb 29, der gegebenenfalls als Getriebemotor ausgebildet ist. Dieser treibt eine Gewindespindel 32, die ein Schubelement 33 antreibt. Das Schubelement 33 gleitet im Bereich von Freistellungen 34 auf den Schubstangen 28. Die Freistellungen 34 sind begrenzt durch Anschlagringe 50 bzw. Schultern 44. Schultern 44 und Anschlagringe 50 könnten auch vertauscht angeordnet sein. Die Ringe dienen als Schultern, sind jedoch für Montagezwecke entfernbar. Sobald das Schubelement 33 an den Schultern 44 oder Ringen 50 anliegt, nimmt es bei seiner Vorwärts- oder Rückwärtsbewegung die Schubstangen 28 mit. Im oberen Bereich des Schubelements 33 ist eine weitere Schubstange 35 verschiebbar plaziert, die durch einen Bremsstein 20 leicht in Axialrichtung gebremst und dadurch mitgenommen wird. Eine Kerbe bzw. Nut 30 an der weiteren Schubstange 35 überträgt diese Axialbewegung auf eine Gabel 15 einer Kulisse 16. Die Kulisse 16 greift mit Positivelementen in Schrägnuten 18 einer Kulisse 17, die vorzugsweise als Printplatte ausgebildet ist. Diese Printplatten tragen je zwei Heizbakkengabeln 19 für die Befestigung der Heizbacken 4. Die Heizbackengabeln 19 sind elektrisch leitend und stellen eine entsprechende Stromzufuhr für die Heizelemente der Heizbacken 4 dar. Im unteren Bereich des Schubelementes 33 sind zwei federnde Druckstifte bzw. Kugelschnapper 21 plaziert. Diese übertragen die Axialbewegung des Schubelementes 33 auf eine als Steuergabel ausgebildete Kulisse 24, indem sie in Rastnuten 22 auf der Kulisse 24 einrasten. Durch die Kulisse 24 werden in entsprechenden Ausnehmungen Schwenkhebel 25 angesteuert, die um Lagerstifte 23 im Rahmen schwenkbar sind. Die Hebel 25 übertragen über Zylinderstifte 26 die Schwenkbewegung zum Schliessen oder Öffnen der Messer 5 bzw. Zentrierbacken 5z (Fig.4.).

Fig. 4 zeigt eine präzise Führung der Messer 5 und Zentrierbacken 5z sowie die einfache Auswechselbarkeit derselben durch geringfügiges Durchbiegen 40 und Ver- bzw. Entrasten an den Zylinderstiften 26, ohne dass dazu Werkzeuge erforderlich sind.

Im Folgenden wird der Funktionsbetrieb des dargestellten Ausführungsbeispieles erläutert:

In der Ausgangs- bzw. Ruheposition befindet sich das Schubelement 33 (Fig. 3) ganz links und damit auch die Schubstangen 28 und der Spannkopf 3 in eingezogener bzw. anliegender Ruhestellung. Durch die ebenfalls zurückgezogene linke Position der Steuerkulisse 24 und der weiteren Schubstange 35 sind die Messer 5 bzw. Zentrierbacken 5z über die Hebel 25 durch Schwenken um seine rahmenfesten Drehachsen 23 und die Heizbacken 4 über die Kulissen 16 und 24 geöffnet.

In dieser Lage wird das zur Bearbeitung vorgesehene Lichtwellenleiterstück zwischen die durch den Lösehebel 6 geöffneten Spannbacken 36 gelegt. Nach dem Auslassen des Hebels 6 werden die Spannbacken durch Torsionsfederkraft geklemmt(einstellbar mit Spannkraftstellrosette 7) zwischen den Spannbacken 36 gehalten.

Nach dem Drücken des Startknopfes verschiebt der Antrieb 29 durch Drehen der Gewindespindel 31 das Schubelement 33 nach rechts. Infolge des leichten Bremseffektes zwischen weiterer Schubstange 35 und Bremsstein 20 wird auch dieser und damit über die Gabel 15 die Kulisse 16 nach rechts geschoben. Durch Schrägnuten 18, in die die abstehenden Positivelemente der Kulisse 16 greifen, werden die Kulissen bzw. Printplatten 17 und damit die Heizbackengabeln 19 und schliesslich die Heizbacken 4 an dem zu bearbeitenden Leiter zusammengefahren.

Durch die in den Nuten 22 eingerasteten Kugelschnapper 21 werden auch die Kulisse 24 nach rechts verschoben und damit die Messer 5 und Zentrierbacken 5z gegen den Leiter geschoben.

Nach diesem Vorschub stoppt die elektronische Steuerung den Antrieb 29, bevor das Schubelement 33 die Schultern 44 der Schubstangen 28 erreicht hat. Die Steuerung wartet nun auf den Ablauf der eingestellten Erwärmungszeit der Heizbacken 4. Nach dieser Zeit schiebt der Antrieb durch Drehen der Gewindespindel 32 das Schubelement 33 weiter nach rechts. Bevorzugt mit reduzierter Geschwindigkeit, die der gewünschten Abzugsgeschwindigkeit entspricht. Bei diesem Vorschub rutscht die weitere Schubstange 33 durch den Bremsstein 20, da sich die Heizbacken 4 nicht weiter schliessen lassen. Die dabei auftretende Reibkraft ist proportional der Anpresskraft der Heizbacken 4 an den Leiter. Durch Einstellung des Anpressdruckes des Bremssteines 20 auf die weitere Schubstange 35 lässt sich somit die Anpresskraft der Heizbacken 4 einstellen. Ebenso kann auch die Kulisse 24 nicht mehr weiter nach rechts geschoben werden, da sie keine weitere Freistellung für die Hebel 25 aufweist. Die Kugelschnapper rasten daher aus den linken Rastnuten 22 aus und gleiten entlang der Seitenkante der Kulisse 24 nach vorn, bis sie in den vorderen Rastnuten 22 einrasten. Nach gewünschtem vollständigem Abzug des abzumantelnden Mantels schaltet die elektronische Steuerung die Motordrehrichtung um und das Schubelement 33 bewegt sich im Bereich der Freistellung 34 zurück, ohne die Schubstangen 28 zu transportieren. Dies bewirkt durch den Reibeffekt des Bremssteines 20, dass die weitere Schubstange zurückgeschoben und dadurch die Heizbacken 4 geöffnet werden. Infolge der Verrastung der Kugelschnapper 21 in den Rastnuten 22 wird auch die Kulisse 24 zurückgezogen, dadurch die Hebel 25 in Öffnungsrichtung geschwenkt und die Messer 5 und Zentrierbacken 5z geöffnet. Bevor nun das Schubelement 33 an dem Anschlagring 50 der Schubstangen 28 anschlägt, stoppt die Elektronik den Antrieb. Erst nach dem Herausnehmen des abisolierten Leiters fährt der Antrieb mit dem Schubelement und den Schubstangen 28 und mit dem Spannkopf 3 mit vorzugsweise erhöhter Geschwindigkeit in die ursprüngliche linke Ruheposition zurück. Dies kann durch das Drücken eines Knopfes "Retour" herbeigeführt werden oder aber auch mit einer gewissen Zeitverzögerung erfolgen. Weiters sind Schaltknöpfe denkbar, die beide Funktionen gleichzeitig ausüben.

Die Vielfalt der zu verarbeitenden Leiter verlangt eine Möglichkeit, die Abisoliermesser 5 und die Zentrierbacken 5z rasch zu wechseln. Dieses Problem ist gemäss Fig. 4 vorteilhafterweise so gelöst, dass eine feste Führungsplatte 37 mit einer hochgenauen Führungsnut 49 versehen ist, die mit einer Deckplatte 38 abgedeckt ist und derart eine präzise Führung für Messer 5 und Zentrierbacken 5z bildet. Federnde Eigenschaften der Messer 5 und Zentrierbacken 5z ermöglichen durch einfaches Durchfedern 40 das Ein- und Ausrasten der Backen.

Die Erfindung umfasst neben der Vorrichtung für das Bearbeiten von Lichtwellenleitern auch eine ebensolche für Kabel im herkömmlichen Sinn, bzw. kann Sie mit Vorteil auch für herkömmliche Kabel eingesetzt werden.

### Bezugszeichenliste

- 1: Hauptkörper
- 2: Steuerungsgehäuse
- 3: Spannkopf
- 4: Heizbacken
- 5: Messer
- 5z: Zentrierbacken
- 6: Lösehebel
- 7: Spannkraft - Stellrosette
- 8: Abfallraum
- 9: Steuerelemente
- 10: Wechselhalter
- 11: Montagehalter, Spezialhalter
- 12: Adapter
- 13: Positionieranschlag
- 14: Hilfsanschlag
- 15: Gabel
- 16: zweite Kulissensteuerung
- 17: Printplatte, elektronische Steuerung
- 18: Schrägnut
- 19: Heizbacken, Steuergabel
- 20: Bremsstein
- 21: Kugelschnapper, federnde Druckstifte
- 22: Rastnuten
- 23: Drehachse
- 24: erste Steuerkulisse
- 25: Hebel
- 26: Zylinderstift
- 27: Schubstangenende
- 28: Schubstangen
- 29: elektrischer Antriebsmotor, Getriebemotor
- 30: Kerbe
- 31: Motorträger
- 32: Gewindespindel
- 33: Schubelement
- 34: Freistellung, Mitnahme-
- 35: weitere Schubstange
- 36: Spannbacken
- 37: Führungsplatte
- 38: Deckplatte
- 39: eingelegte Position, Zentrier- und Messerbacken
- 40: Durchfedern von Zentrier- und Messerbacken beim Wechseln
- 41: Spalt für Lichtwellenleiter
- 42 43: Lichtwellenleiter
- 44: erste Schulter
- 45: mehradriger Lichtwellenleiter
- 46: Mantel
- 47: Stützschulter
- 48: Messerschneide
- 49: Führungsnut
- 50: Anschlagring, z.B. Sicherungsring
- 51: Griff
- 52: Anschlagfläche
- 53: Achse
- 54: Heizfläche
- 55: Lichtwellenleiterende
- 56: Zentrierfläche

## Patentansprüche

1. Vorrichtung zum Entfernen wenigstens einer Schicht von einem ein- oder mehradrigen Lichtwellenleiter (45), mit einem Schubelement (33) und einer in Axialrichtung des Lichtwellenleiters (45) verschiebbaren Einspannvorrichtung (3) und mit mindestens einem Abisoliermesser (5) und einem Abziehantrieb (29) für das Erzeugen einer Abisolierabziehbewegung zwischen Einspannvorrichtung (3) und Abisoliermesser (5), **dadurch gekennzeichnet, dass** der Abziehantrieb (29) mit dem Schubelement (33) in Wirkverbindung steht, **und dass** das Schubelement (33) in einer ersten Phase seiner Bewegung kraftschlüssig mit einem ersten ersten Mechanismus (21-26) zum Schliessen und Öffnen des Abisoliermessers (5) verbunden ist und in einer zweiten Phase seiner Bewegung mittels eines zweiten Mechanismus (27,44) zur Erzeugung der Abisolierabziehbewegung ausgebildet ist.

2. Vorrichtung zum Entfernen wenigstens einer Schicht von einem ein- oder mehradrigen Lichtwellenleiter (45), mit einem Schubelement (33) und einer in Axialrichtung des Lichtwellenleiters (45) verschiebbaren Einspannvorrichtung (3) und mit mindestens einem Abisoliermesser (5) und einem Abziehantrieb (29) für das Erzeugen einer Abisolierabziehbewegung zwischen Einspannvorrichtung (3) und Abisoliermesser (5), **dadurch gekennzeichnet, dass** der Abziehantrieb (29) mit dem Schubelement (33) in Wirkverbindung steht, **und dass** das Schubelement (33) in einer ersten Phase seiner Bewegung kraftschlüssig mit einem zweiten ersten Mechanismus (35,30,15-19) zum Schliessen und Öffnen einer Heizeinrichtung (4) am Lichtwellenleiter (45) verbunden ist und in einer zweiten Phase seiner Bewegung mittels eines zweiten Mechanismus (27,44) zur Erzeugung der Abisolierabziehbewegung ausgebildet ist.

3. Vorrichtung nach Anspruch 1 oder 2, **dadurch gekennzeichnet, dass** das Schubelement (33) und der zweite Mechanismus (27,44) zum axialen Verschieben der Einspannvorrichtung (3) relativ zu dem Messer (5) mit derselben verbunden ist.

4. Vorrichtung nach einem der vorgehenden Ansprüche, **dadurch gekennzeichnet, dass** das Schubelement (33) mit den ersten und zweiten ersten Mechanismen verbunden ist, sodass der Abziehantrieb sowohl das Öffnen und Schliessen der Heizeinrichtung (4), als auch das Öffnen und Schliessen des Messers (5) als auch das Erzeugen der relativen Abziehbewegung bewerkstelligt.

5. Vorrichtung nach einem der vorhergehenden Ansprüche, **dadurch gekennzeichnet, dass** zwischen dem Abisoliermesser (5) und dem Abziehantrieb (29) eine erste Kupplung (21,22) vorgesehen ist, die ein getrenntes Betätigen bzw. Verschieben von Abisoliermessern (5) und Einspannvorrichtung (3;11-13) gestattet, wobei die Schliessbewegung der Abisoliermesser (5) vorzugsweise begrenzt ist.

6. Vorrichtung nach einem der vorhergehenden Ansprüche, **dadurch gekennzeichnet, dass** zwischen der Einspannvorrichtung (3;11-13) und dem zweiten Mechanismus (32,33,28) eine zweite Kupplung (34,44,50) vorgesehen ist, so dass sowohl eine Vorwärts- als auch eine Rückwärtsbewegung der Einspannvorrichtung (3;11-13) unabhängig von der Schliessbewegung des Abisoliermessers (5) möglich ist.

7. Vorrichtung mit einer Heizeinrichtung für zu erwärmende Lichtwellenleiter bzw. Lichtwellenleitermäntel nach einem der vorhergehenden Ansprüche, **dadurch gekennzeichnet, dass** die Heizeinrichtung zwei spannbackenähnliche Heizbacken (4) umfasst, die motorisch gesteuert radial an den Lichtwellenleiter anlegbar sind.

8. Vorrichtung nach Anspruch 7 , **dadurch gekennzeichnet, dass** der zweite erste Mechanismus (33,35,20,16,17) eine dritte Kupplung umfasst, die insbesondere als Rutschkupplung (35,20) ausgebildet ist.

9. Vorrichtung nach Anspruch 7 oder 8, **dadurch gekennzeichnet, dass** wenigstens ein Heizbacken (4) um eine zur Lichtwellenleiterachse parallele Achse (53) schwenkbar ist.

10. Vorrichtung nach einem der vorhergehenden Ansprüche, **dadurch gekennzeichnet, dass** beide Heizbacken (4) spannungs- oder stromgesteuert heizbar sind und an ihrer dem Lichtwellenleiter zuwendbaren Heizfläche (54) gleitend - insbesondere mit Teflon (R) o.dgl. - beschichtet sind, oder dass alternativ zur Gleitbeschichtung eine stark haftende - insbesondere Elastomer - Beschichtung zum umklammerten Abzug stark haftender Schutzschichten vorgeschen ist.

11. Vorrichtung nach einem der vorhergehenden Ansprüche, **dadurch gekennzeichnet, dass** die Kupplungen wenigstens eines der folgenden Elemente umfassen: eine Mitnahmefreistellung (34) entlang einer Schubstange (28); einen Kugelschnapper (21) mit gegengleichen Rastnuten (22) an einer Steuerkulisse (24); eine - insbesondere druckkraftgesteuerte Rutschkupplung (35,20).

12. Vorrichtung nach einem der vorhergehenden Ansprüche, **dadurch gekennzeichnet, dass** die Mechanismen wenigstens eines der folgenden Elemente aufweisen: eine axial verschiebbare Schubstange (28) mit einem spindelgetriebenen Schubelement (33); eine parallel zur Lichtwellenleiterachse verschiebbare erste Steuerkulisse (24), die durch das Schubelement (33) wahlweise antreibbar ist und vorzugsweise mit Schwenkhebeln (25) zu Abisoliermesseransteuerung zusammenwirkt; eine zweite Kulissensteuerung (16,17), die - bevorzugt von einer weiteren Schubstange (35) - parallel zur Achse des Lichtwellenleiters verschiebbar ist, wobei insbesondere die weitere Schubstange (35) durch das Schubelement (33) bevorzugt rutschgekuppelt antreibbar ist.

13. Vorrichtung nach einem der vorhergehenden Ansprüche, **dadurch gekennzeichnet, dass** die Einspannvorrichtung (3) einen Klemmmechanismus, insbesondere in Einspannrichtung federbelastete Spannbacken (36) o.dgl. umfasst, die durch einen Lösehebel (6) geöffnet werden können, wobei die Vorspannung der Einspannkraft einstellbar ist.

14. Vorrichtung nach einem der vorhergehenden Ansprüche, **dadurch gekennzeichnet, dass** den Abisoliermessern (5) unmittelbar an diesen anliegende Zentrierbacken (5z) zur Seite gestellt sind, wobei die Abisoliermesser (5) bevorzugt zwischen dem Lichtwellenleiterende (55) und den Zentrierbacken (5z) angeordnet sind und gemeinsam mit diesen ansteuerbar sind.

15. Vorrichtung nach einem der vorhergehenden Ansprüche, **dadurch gekennzeichnet, dass** die Abisoliermesser (5) und Zentrierbacken (5z) in einer gemeinsamen Führungsnut (49) einer Führungsplatte (37) geführt sind und durch je einen gemeinsamen Zylinderstift (26) zueinander positioniert werden, wobei die Führungsnut (49) bevorzugt durch eine Deckplatte (38) verschliessbar ist.

16. Vorrichtung nach einem der vorhergehenden Ansprüche, **dadurch gekennzeichnet, dass** die Zentrierbacken (5z) und/oder die Abisoliermesser (5) entlang ihrer Längserstreckung elastisch biegbar sind, und beim Auswechseln in die Führungsnut (49) einschiebbar und an den Zylinderstiften (26) verrastbar sind.

17. Vorrichtung nach einem der vorhergehenden Ansprüche, **dadurch gekennzeichnet, dass** die Heiztemperatur, die Heizdauer der Heizbacken (4) und/oder die Abzugsgeschwindigkeit des elektrischen Abziehantriebes (29) elektronisch einstellbar sind.

18. Vorrichtung nach einem der vorhergehenden Ansprüche, **dadurch gekennzeichnet, dass** der elektrische Abziehantrieb (29), die Elektronik und die Heizbacken (4) batteriebetrieben sind.

19. Vorrichtung nach einem der vorhergehenden Ansprüche, **dadurch gekennzeichnet, dass** zwischen den Abisoliermessern (5) und Spannbacken (36) ein - vorzugsweise einstellbarer - Hilfsanschlag (14) zur Seite gestellt ist, der die radiale Lage der Lichtwellenleiter vorzentriert bevor die Spannbacken (36) geschlossen werden.

20. Vorrichtung nach einem der vorhergehenden Ansprüche, **dadurch gekennzeichnet, dass** eine - gegebenenfalls verstellbarer - Begrenzung vorgesehen ist, um die Schliessbewegung der Abisoliermesser (5) aus Verschmutzungsvorbeugung vor deren Anschlag zu stoppen.

21. Verfahren zum Betrieb einer Vorrichtung mit einem Schubelement (33) nach einem der vorhergehenden Ansprüche, **dadurch gekennzeichnet, dass** während einer Bewegung des Schubelementes (33) zwischen den Anschlagringen (50) und Schultern (44) infolge der Betätigung der ersten ersten und/oder zweiten ersten Mechanismen (21-26) bzw. zweiten ersten Mechanismus (35,30,15-19) wenigstens die Abisoliermesser (5) und/oder die Heizbacken (4) schliessen oder öffnen, wobei gleichzeitig die Schubstangen (28), der Wechselhalter (10) und damit auch der Spannkopf (3) in Ruhe bleiben.

## Claims

1. Apparatus for removing at least one layer from a single-conductor or multiconductor optical waveguide (45), comprising a feed element (33) and a clamping device (3) displaceable in the axial direction of the optical waveguide (45), and comprising at least one insulation stripping knife (5) and a stripping drive (29) for producing an insulating stripping movement between clamping device (3) and insulation stripping knife (5), **characterized in that** the stripping drive (29) is operatively connected to the feed element (33) and that the feed element (33), in a first phase of its movement, has frictional connection to a first first mechanism (21-26) for closing and opening the insulation stripping knife (5) and, in a second phase of its movement, is formed by means of a second mechanism (27, 44) for producing the insulation stripping movement.

2. Apparatus for removing at least one layer from a single-conductor or multiconductor optical waveguide (45), comprising a feed element (33) and a clamping device (3) displaceable in the axial direction of the optical waveguide (45), and comprising at least one insulation stripping knife (5) and a stripping drive (29) for producing an insulating stripping movement between clamping device (3) and insulation stripping knife (5), **characterized in that** the stripping drive (29) is operatively connected to the feed element (33) and that the feed element (33), in a first phase of its movement, has frictional connection to a second first mechanism (35, 30, 15-19) for closing and opening a heating means (4) on the optical waveguide (45) and, in a second phase of its movement, is formed by means of a second mechanism (27, 44) for producing the insulation stripping movement.

3. Apparatus according to Claim 1 or 2, **characterized in that** the feed element (33) and the second mechanism (27, 44) for axial displacement of the clamping device (3) relative to the knife (5) is connected thereto.

4. Apparatus according to any of the preceding Claims, **characterized in that** the feed element (33) is connected to the first and second first mechanisms so that the stripping drive ensures the opening and closing of the heating means (4) as well as the opening and closing of the knife (5) as well as the production of the relative stripping movement.

5. Apparatus according to any of the preceding Claims, **characterized in that** a first coupling (21, 22) which permits separate actuation or displacement of insulation stripping knives (5) and clamping device (3; 11-13) is provided between the insulation stripping knife (5) and the stripping drive (29), the closing movement of the insulation stripping knife (5) preferably being limited.

6. Apparatus according to any of the preceding Claims, **characterized in that** a second coupling (34, 44, 50) is provided between the clamping device (3; 11-13) and the second mechanism (32, 33, 28) so that both a forward movement and a backward movement of the clamping device (3; 11-13) is possible independently of the closing movement of the insulation stripping knife (5).

7. Apparatus comprising a heating means for optical waveguides or optical waveguide sheaths to be heated, according to any of the preceding Claims, **characterized in that** the heating means comprises two heating jaws (4) which resemble clamping jaws and can be brought to rest radially against the optical waveguide under motor control.

8. Apparatus according to Claim 7, **characterized in that** the second first mechanism (33, 35, 20, 16, 17) comprises a third coupling which in particular is in the form of a friction clutch (35, 20).

9. Apparatus according to Claim 7 or 8, **characterized in that** at least one heating jaw (4) is pivotable about an axis (53) parallel to the optical waveguide axis.

10. Apparatus according to any of the preceding Claims, **characterized in that** both heating jaws (4) are heatable with voltage- or current-control and are coated with a non-stick material - in particular with Teflon (R) or the like - on the heating surface (54) which can be turned towards the optical waveguide, or that, alternatively to the non-stick coating, a strongly adhering - in particular elastomer - coating for clamped stripping of strongly adhering protective layers is provided.

11. Apparatus according to any of the preceding Claims, **characterized in that** the couplings comprise at least one of the following elements: a driving clearance (34) along a slide rod (28); a ball catch (21) having diametrically opposite locking grooves (22) on a control link (24); a - in particular pressure-controlled - friction clutch (35, 20).

12. Apparatus according to any of the preceding Claims, **characterized in that** the mechanisms have at least one of the following elements: an axially displaceable slide rod (28) having a spindle-driven feed element (33); a first control link (24) which is displaceable parallel to the optical waveguide axis, is optionally drivable by the feed element (33) and preferably cooperates with pivot levers (25) for actuating the insulation stripping knife; a second sliding block governor (16, 17) which is displaceable - preferably by a further slide rod (35) - parallel to the axis of the optical waveguide, in particular the further slide rod (35) being drivable by the feed element (33) preferably with participation of the friction clutch.

13. Apparatus according to any of the preceding Claims, **characterized in that** the clamping device (3) comprises a clamping mechanism, in particular clamping jaws (36) spring-loaded in the clamping direction, or the like, which can be opened by a release lever (6), the initial tension of the clamping force being adjustable.

14. Apparatus according to any of the preceding Claims, **characterized in that** centring jaws (5z) directly adjacent to the insulation stripping knives (5) are positioned to the side of said knives, the insulation stripping knives (5) preferably being arranged between the optical waveguide end (55) and the centring jaws (5z) and being actuatable together with these.

15. Apparatus according to any of the preceding Claims, **characterized in that** the insulation stripping knives (5) and centring jaws (5z) are guided in a common guide groove (49) of a guide plate (37), and are positioned relative to one another by one common straight pin (26) each, the guide groove (49) preferably being closable by a cover plate (38).

16. Apparatus according to any of the preceding Claims, **characterized in that** the centring jaws (5z) and/or the insulation stripping knives (5) are elastically bendable along their longitudinal dimension to enable them to be pushed into the guide groove (49) and locked on the straight pins (26) on replacement.

17. Apparatus according to any of the preceding Claims, **characterized in that** the heating temperature, the heating time of the heating jaws (4) and/or the stripping speed of the electrical stripping drive (29) are electronically adjustable.

18. Apparatus according to any of the preceding Claims, **characterized in that** the electrical stripping drive (29), the electronics and the heating jaws (4) are battery-operated.

19. Apparatus according to any of the preceding Claims, **characterized in that** a - preferably adjustable - auxiliary stop (14) which precentres the radial position of the optical waveguide before the clamping jaws (36) are closed is positioned to one side between the insulation stripping knives (5) and clamping jaws (36).

20. Apparatus according to any of the preceding Claims, **characterized in that** a - optionally adjustable - limitation is provided in order to stop the closing movement of the insulation stripping knives (5) to prevent soiling before they make contact.

21. Method for operating an apparatus comprising a feed element (33) according to any of the preceding Claims, **characterized in that** at least the insulation stripping knives (5) and/or the heating jaws (4) close or open during a movement of the feed element (33) between the stop rings (50) and shoulders (44) as a result of the actuation of the first first and/or second first mechanisms (21-26) or second first mechanism (35, 30, 15-19), at the same time the slide rods (28), the interchangeable holder (10) and hence also the clamping head (3) remaining stationary.

## Revendications

1. Dispositif d'enlèvement d'au moins une couche sur des guides d'onde (45) monoconducteur ou multiconducteur, comprenant un élément de poussée (33) et un dispositif de serrage (3) déplaçable en direction axiale du guide d'onde (45), et ayant au moins une lame de dénudage (5) et un entraînement d'enlèvement (29) pour engendrer un mouvement de dénudage et d'enlèvement entre le dispositif de serrage (3) et la lame de dénudage (5), **caractérisé en ce que** l'entraînement d'enlèvement (29) est en interaction avec l'élément de poussée (33), et que l'élément de poussée (33), dans une première phase de son mouvement, est relié par adhérence à un premier premier mécanisme (21-26) pour fermer et ouvrir la lame de dénudage (5) et, dans une deuxième phase de son mouvement, est formé au moyens d'un deuxième mécanisme (27, 44) pour engendrer le mouvement de dénudage et d'enlèvement.

2. Dispositif d'enlèvement d'au moins une couche sur des guides d'onde (45) monoconducteur ou multiconducteur, comprenant un élément de poussée (33) et un dispositif de serrage (3) déplaçable en direction axiale du guide d'onde (45), et ayant au moins une lame de dénudage (5) et un entraînement d'enlèvement (29) pour engendrer un mouvement de dénudage et d'enlèvement entre le dispositif de serrage (3) et la lame de dénudage (5), **caractérisé en ce que** l'entraînement d'enlèvement (29) est en interaction avec l'élément de poussée (33), et que l'élément de poussée (33), dans une première phase de son mouvement, est relié par adhérence à un seconde premier mécanisme (35, 30, 15-19) pour fermer et ouvrir un dispositif de chauffage (4) au guide d'onde (45) et, dans une deuxième phase de son mouvement, est formé au moyens d'un deuxième mécanisme (27, 44) pour engendrer le mouvement de dénudage et d'enlèvement.

3. Dispositif selon la revendication 1 ou 2, **caractérisé en ce que** l'élément de poussée (33) et le deuxième mécanisme (27, 44), pour déplacer le dispositif de serrage (3) en relation à la lame (5), sont reliés avec celui-ci.

4. Dispositif selon une quelconque des revendications précédentes, **caractérisé en ce que** l'élément de poussée (33) est relié aux premier et seconde premiers mécanismes, de manière que l'entraînement d'enlèvement accomplit l'ouverture et la fermeture du dispositif de chauffage (4) ainsi que l'ouverture et la fermeture de la lame (5) ainsi que la génération du mouvement relative d'enlèvement.

5. Dispositif selon une quelconque des revendications précédentes, **caractérisé en ce qu'**entre la lame de dénudage (5) et l'entraînement d'enlèvement (29) un premier dispositif d'accouplement (21, 22) est prévu permettant un actionnement ou déplacement séparé des lames de dénudage (5) et du dispositif de serrage (3; 11-13), le mouvement de fermeture des lames de dénudage (5) étant, de préférence, limité.

6. Dispositif selon une quelconque des revendications précédentes, **caractérisé en ce qu'**un deuxième dispositif d'accouplement (34, 44, 50) est prévu entre le dispositif de serrage (3; 11-13) et le deuxième mécanisme (32, 33, 28) de manière à rendre possible une avance ainsi qu'un mouvement en marche arrière du dispositif de serrage (3; 11-13) indépendamment du mouvement de fermeture de la lame de dénudage (5).

7. Dispositif comprenant un dispositif de chauffage pour des guides d'onde ou des gaines de guide d'onde selon une quelconque des revendications précédentes, **caractérisé en ce que** le dispositif de chauffage comprend deux mâchoires de chauffage (4) similaires aux mâchoires de serrage, qui peuvent être mis radialement contre le guide d'onde en étant commandées par moteur.

8. Dispositif selon la revendication 7, **caractérisé en ce que** le seconde premier mécanisme (35, 30, 20, 16, 17) comprend un troisième dispositif d'accouplement, qui, en particulier, est formé comme accouplement à glissement (35, 20).

9. Dispositif selon la revendication 7 ou 8, **caractérisé en ce qu'**au moins une mâchoire de chauffage (4) est pivotant autour d'un axe (53) parallèle à l'axe du guide d'onde.

10. Dispositif selon une quelconque des revendications précédentes, **caractérisé en ce que** les deux mâchoires de chauffage (4) peuvent être chauffées d'une façon commandée soit par tension, soit par courant, et que sa surface de chauffage (54) tournées vers le guide d'onde est couverte d'une couche d'une manière glissante, particulièrement avec de Téflon (R) ou pareil, ou que, comme alternative à une couche de glissement, une couche de forte adhérence, particulièrement d'un élastomère, est prévue pour l'enlèvement embrassé des couches de protection d'une forte adhérence.

11. Dispositif selon une quelconque des revendications précédentes, **caractérisé en ce que** les dispositifs d'accouplement comprennent au moins un des éléments suivants: un place libre d'entraînement (34) le long d'une bielle (28); un loqueteau à bille (21) avec des crans (22) diamétralement opposés à une coulisse de commande (24); un accouplement à glissement (35, 20), qui est, en particulier, commandé par pression.

12. Dispositif selon une quelconque des revendications précédentes, **caractérisé en ce que** les mécanismes comprennent au moins un des éléments suivants: une bielle de poussée (28) axialement déplaçable avec un élément de poussée (33) entraîné par une broche; une première coulisse de commande (24) déplaçable parallèlement à l'axe du guide d'onde, ladite coulisse étant entraînée sélectivement par ledit élément de poussée (33) et coopérant, de préférence, avec des leviers pivotants (25) pour l'asservissement de lame de dénudage; une deuxième asservissement à coulisse (16, 17), qui est déplaçable parallèlement à l'axe du guide d'onde, préférablement par une autre bielle de poussée (35), l'autre bielle de poussée (35) pouvant être entraînée particulièrement par l'élément de poussée (33), préférablement au moyens d'un accouplement à glissement.

13. Dispositif selon une quelconque des revendications précédentes, **caractérisé en ce que** le dispositif de serrage (3) comprend un mécanisme pinceur, particulièrement des mâchoires de serrage (36) ou pareilles chargées par ressort en direction de serrage, qui peuvent être ouvertes par un levier de desserrage (6), la prétension de la force de serrage étant adjustable.

14. Dispositif selon une quelconque des revendications précédentes, **caractérisé en ce que** des mâchoires de centrage (5z) sont posées à côté des lames de dénudage (5) en les contactant directement, les lames de dénudage (5) étant situées préférablement entre le bout du guide d'onde (55) et les mâchoires de centrage (5z) et étant commandées en commun avec ceux-ci.

15. Dispositif selon une quelconque des revendications précédentes, **caractérisé en ce que** les lames de dénudage (5) et des mâchoires de centrage (5z) sont guidées ensemble dans une rainure de guidage (49) d'une plaque de guidage (37) et sont positionnées relativement les unes à les autres par une goupille cylindrique (26) commune, la rainure de guidage (49) pouvant être préférablement fermée par une plaque de recouvrement (38).

16. Dispositif selon une quelconque des revendications précédentes, **caractérisé en ce que** les mâchoires de centrage (5z) et/ou les lames de dénudage (5) sont flexibles d'une manière élastique le long de leur dimension longitudinale et peuvent être introduites dans la rainure de guidage (49) lors de leur échange et enclenchées aux goupilles cylindriques (26).

17. Dispositif selon une quelconque des revendications précédentes, **caractérisé en ce que** la température de chauffage, le temps de chauffage des mâchoires de chauffage (4) et/ou la vitesse d'enlèvement de l'entraînement d'enlèvement électrique (29) sont adjustables de façon électronique.

18. Dispositif selon une quelconque des revendications précédentes, **caractérisé en ce que** l'entraînement d'enlèvement électrique (29), les moyens électroniques et les mâchoires de chauffage (4) sont en service par batteries.

19. Dispositif selon une quelconque des revendications précédentes, **caractérisé en ce qu'**entre les lames de dénudage (5) et des mâchoires de serrage (36) une butée auxiliaire (14), préférablement adjustable, est posées à côté, qui précentre la position radiale des guides d'onde, avant que les mâchoires de serrage (36) soient fermées.

20. Dispositif selon une quelconque des revendications précédentes, **caractérisé en ce qu'**une limitation, le cas échéant adjustable, est prévue pour arrêter le mouvement de fermeture des lames de dénudage (5) avant de leur butée comme prévention de pollution.

21. Procédé de service d'un dispositif ayant un élément de poussée (33) selon une quelconque des revendications précédentes, **caractérisé en ce qu'**au moins les lames de dénudage (5) et/ou les mâchoires de chauffage (4) ferment ou ouvrent pendant un mouvement de l'élément de poussée (33) entre les anneaux de butée (50) et des épaules (44) à cause de l'actionnement des premiers premiers mécanismes et/ou des secondes premiers mécanismes (21-26) ou seconde premier mécanisme (35, 30, 15-19), tandis qu'au même temps les bielles de poussée (28), le support de changement (10) et, avec celui-ci, la tête de serrage (3) aussi restent en repos.
